Europäisches Patentamt

European Patent Office

Office européen des brevets

(11) Veröffentlichungsnummer : **0 085 685**
**B1**

# (12) EUROPÄISCHE PATENTSCHRIFT

(45) Veröffentlichungstag der Patentschrift :
30.07.86

(21) Anmeldenummer : 82902248.2

(22) Anmeldetag : 10.08.82

(86) Internationale Anmeldenummer :
PCT/CH 82/00096

(87) Internationale Veröffentlichungsnummer :
WO/8300710 (03.03.83 Gazette 83/06)

(51) Int. Cl.⁴ : E 02 B 15/04

(54) VORRICHTUNG ZUR BILDUNG EINER ÖLWEHR.

(30) Priorität : 14.08.81 CH 5260/81

(43) Veröffentlichungstag der Anmeldung :
17.08.83 Patentblatt 83/33

(45) Bekanntmachung des Hinweises auf die Patenterteilung : 30.07.86 Patentblatt 86/31

(84) Benannte Vertragsstaaten :
AT BE DE FR GB LU NL SE

(56) Entgegenhaltungen :
DE-A- 1 946 543
DE-A- 2 817 219
FR-A- 2 143 039
FR-A- 2 372 933
GB-A- 1 568 331

(73) Patentinhaber : EINSATZGEMEINSCHAFT ZUM
SCHUTZE DER DEMOKRATISCHEN RECHTE IN DER
SCHWEIZ E.V.
Turnerstrasse 3
CH-8006 Zürich (CH)

(72) Erfinder : STAUBER, Hans-Jakob
Witikonerstrasse 65
CH-8032 Zürich (CH)
Erfinder : WOHLER, Hans
Hinterdorf 188
CH-5054 Mooslerau (CH)

(74) Vertreter : Feldmann, Clarence Paul
c/o Patentanwaltsbüro FELDMANN AG Postfach
Kanalstrasse 17
CH-8152 Glattbrugg (CH)

## Beschreibung

Die vorliegende Erfindung betrifft eine Vorrichtung zur Bildung eines Oelwehrs mittels mindestens eines in Längsrichtung in zwei getrennte Kammern unterteilten Schlauches, von denen im Gebrauchszustand die untere Kammer vollständig mit Wasser, die obere Kammer vollständig mit Luft gefüllt ist, und dass am Schlauch Oesen zur Befestigung der Vorrichtung angebracht sind.

Vorrichtungen dieser Art sind bekannt aus der DE-A-2 817 219. Die getrennten Kammern sind hier als separate Schläuche ausgestaltet, die lediglich über Laschen miteinander verbunden sind. Die genannte Vorrichtung wird in der Gebrauchslage über Karabinerhaken, die an der oberen, mit Luft gefüllten Kammer befestigt sind, an ein Tragseil gehalten. Die Haltefunktion beschränkt sich hierbei auf die örtliche Lage der Vorrichtung im fliessenden Gewässer und verhindert dessen Richtungs- bzw. Formänderung bezüglich dem Tragseil. Eine Aufteilung der unteren und oberen Schichten der Strömung im Gewässer ist nicht vorgesehen und lässt sich auch nicht erreichen.

Ebenfalls die FR-A-2 372 933 kommt dem eingangs genannten Stand der Technik sehr nahe. Auch hier wird eine Vorrichtung zur Bildung eines Oelwehrs, mittels eines in zwei getrennten Kammern unterteilten Schlauches, von denen im Gebrauchszustand die untere Kammer vollständig mit Wasser, die obere mit Luft gefüllt ist, beschrieben. Verschieden ist jedoch die Anordnung der Kammern insofern, dass die obere, Luft gefüllte Kammer, in der erheblich grösseren Kammer plaziert ist. Oesen oder entsprechende Halteelemente zur Lage oder Richtungsstabilisation sind nicht vorgesehen, da die Vorrichtung für ruhende Gewässer mit geringer Strömung gedacht ist.

Es ist eine Tatsache, dass bei allen bekannten Oelwehrs die strömungstechnisch bedingten Schwierigkeiten nur ungenügend erkannt wurden. Obwohl in fliessenden Gewässern keine vollständige Stauung erreicht werden kann und auch gar nicht beabsichtigt ist, tritt selbstverständlich eine gewisse Stauung auf. Die Lage der Vorrichtung im Wasser bezüglich den herrschenden Strömungsverhältnissen ist dabei eminent wichtig, soll die Vorrichtung nicht unter- oder überspült werden.

Es ist die Aufgabe der vorliegenden Erfindung eine Vorrichtung zur Bildung eines Oelwehrs der eingangs genannten Art derart zu verbessern, dass sie den strömungsbedingten Verhältnissen entsprechend in geeigneter Lage gehalten werden kann.

Diese Aufgabe löst die Erfindung dadurch, dass der Schlauch einen etwa birnenförmigen Querschnitt aufweist und durch eine im Gebrauchszustand etwa horizontale Trennwand in zwei ungleichgrosse Kammern unterteilt ist, dass mindestens zwei Reihen von Oesen am Schlauch angebracht sind, und dass die Oesen zumindest an der unteren mit Wasser gefüllten Kammer angebracht sind und zwar derart, dass mittels der durch die Halteösen geführten Halteseile die relative Lage der Kammern zueinander im Wasser beeinflussbar ist.

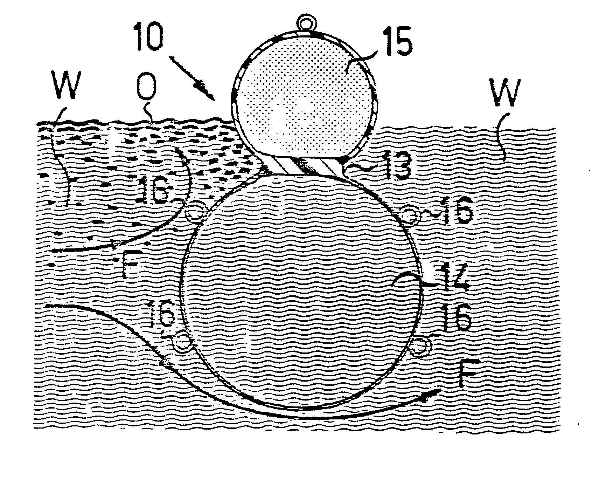

In der Zeichnung ist ein Ausführungsbeispiel des Erfindungsgegenstandes schematisch dargestellt.

In der Figur ist die Vorrichtung zur Bildung einer Oelwehr gesamthaft mit 10 bezeichnet.

Die verunreinigte Wasseroberfläche befindet sich links, die saubere Wasseroberfläche rechts von der Vorrichtung. Auf der verunreinigte Wasseroberfläche schwimmt die Oelschicht O auf dem Wasser W.

Diese Ausführung ist besonders für fliessende Gewässer geeignet und weist als besonderes Merkmal zwei ungleich grosse Kammern 14, 15 auf. Oben liegt die kleinere, mit Luft gefüllte Kammer 15 und unten die grössere mit Wasser gefüllte Kammer 14, Das in Richtung der Pfeile F strömende Wasser trifft somit auf die Vorrichtung 10 auf und lässt die unteren Wasserschichten ungehindert passieren, während der Oelteppich und die oberen Wasserschichten, in denen zum Teil mit dem Wasser emulgiertes Oel enthalten ist, gestaut wird und dadurch eine Abscheidung der emulgierten Stoffe fördert. Das ohnehin dank seiner geringeren Wichte aufschwimmende Oel wird zurück gehalten. Die strömungsgerechte Form hat den Vorteil, dass keine zu hohen Druckkräfte durch das fliessende Wasser auf die Vorrichtung ausgeübt werden.

Wesentlich ist es, insbesondere in fliessenden Gewässern, die Oesen für die Halteseile korrekt anzuordnen. Dazu dienen insbesondere die Oesen 16.

Die weiteren Oesen 16 dienen ebenfalls der Befestigung und Versteifung der Vorrichtung mittels Seilen. Die Versteifung der Vorrichtung kann mittels Ueberdruck in einer der Kammern 14 oder 15 erhöht werden.

Der Durchmesser der Vorrichtung ist je nach Anwendungszweck verschieden, jedoch mindestens cirka 50 cm gross.

## Patentanspruch

Vorrichtung zur Bildung eines Oelwehrs mittels mindestens eines in Längsrichtung in zwei getrennte Kammern (14, 15) unterteilten Schlauches (10), von denen im Gebrauchszustand die untere Kammer vollständig mit Wasser, die obere Kammer vollständig mit Luft gefüllt ist, und dass am Schlauch Oesen (16) zur Befestigung der Vorrichtung an Halteseilen angebracht sind, dadurch gekennzeichnet, dass der Schlauch einen etwa birnenförmigen Querschnitt aufweist und durch eine im Gebrauchszustand etwa horizontale Trennwand (13) in zwei ungleich

grosse Kammern unterteilt ist, dass mindestens zwei Reihen von Oesen (16) am Schlauch angebracht sind, und dass die Oesen zumindest an der unteren mit Wasser gefüllten Kammer angebracht sind und zwar derart, dass mittels der durch die Halteösen geführten Halteseilen die relative Lage der Kammern zueinander im Wasser beinflussbar ist.

## Claim

An apparatus for forming an oil barrier by means of at least one tube (10) subdivided longitudinally into two separate chambers (14, 15), of which, in use, the lower chamber is completely filled with water and the upper chamber is completely filled with air, and rings (16) for attaching the apparatus to holding ropes are provided on the tube, characterized in that the tube has an approximately pear-shaped cross-section and is subdivided into two chambers of unequal size by a dividing wall (13) which in use is approximately horizontal, at least two rows of rings (16) are provided on the tube, and the rings are provided at least on the water-filled lower chamber, such that the position of the chambers relative to one another in the water may be controlled by means of the holding ropes guided through the holding rings.

## Revendication

Dispositif pour constituer un barrage de protection des eaux contre les fuites d'huile, au moyen d'au moins un tuyau (10) divisé en direction longitudinale en deux chambres séparées (14, 15), desquelles, en position d'utilisation, la chambre inférieure est remplie complètement par de l'eau, et la chambre supérieure est remplie complètement par de l'air et qu'au tuyau sont prévus des œillets (16) pour la fixation du dispositif à des cordes de maintien, caractérisé en ce que le tuyau présente une section transversale à peu près en forme de poire et qu'il est divisé, en position d'utilisation, au moyen d'une paroi de séparation (13) sensiblement horizontale, en deux chambres de grandeurs différentes, qu'au moins deux rangées d'œillets (16) sont prévues au tuyau, et que les œillets sont prévus au moins à la chambre inférieure remplie d'eau et ceci de telle sorte que la position relative des chambres l'une par rapport à l'autre soit influençable au moyen des cordes de maintien guidées dans les œillets de maintien.